# EUROPEAN PATENT SPECIFICATION

(11) **EP 1 281 935 B1**
(45) Date of publication and mention of the grant of the patent: **09.10.2013**
(21) Application number: 02077770.2
(22) Date of filing: 08.07.2002
(51) Int. Cl.: G01D 3/036

(54) **Linear position encoding system**
Linearpositionskodiersystem
Système de codage de position linéaire

(30) Priority: 20.07.2001 EP 01202776
(43) Date of publication of application: 05.02.2003
(73) Proprietor: Océ-Technologies B.V., 5914 CC Venlo (NL)
(72) Inventor: Urselmann, Johannes Wilhelmus Maria, 5731 LR Mierlo (NL)
(74) Representative: van de Sande, Jacobus

(56) References cited:
- US-A- 4 034 460
- US-A- 5 182 867
- PATENT ABSTRACTS OF JAPAN vol. 2000, no. 15, 6 April 2001 (2001-04-06) & JP 2000 355110 A (CANON INC), 26 December 2000 (2000-12-26)

## Description

The invention relates to a linear position encoding system for a moving carriage carrying at least two active elements that are spaced apart in the direction of movement of the carriage, comprising a codestrip extending along the path of movement of the carriage and having a plurality of position marks detectable by a sensor mounted on the carriage.

The invention is applicable in particular to printers, plotters or scanners wherein the carriage carries, as active elements, printing elements, pens and photoelectric sensing elements, respectively.

An example of an encoding system of this type is disclosed in EP-A-0 807 528 which relates to an ink jet printer. The carriage is movable in a main scanning direction relative to a platen on which a recording sheet, e.g., paper, is fed in a subscanning direction orthogonal to the main scanning direction. The printing elements carried on the carriage are formed by nozzles from which ink droplets are expelled onto the recording sheet under the control of a printer control system. The nozzles are arranged in rows extending in parallel with the subscanning direction, so that, during each scan pass of the carriage, a number of lines corresponding to the number of nozzles in a row can be printed. The encoding system is used for determining the timings at which the individual nozzles are to be fired in accordance with the image information to be printed. The position marks on the codestrip may be formed by dark bars on a light background or vice versa, that are arranged in a very fine regular pattern and may be detected by an optical sensor mounted on the carriage. As an alternative, in case of a transmission-type codestrip, the position marks may be formed by transparent slits in an opaque substrate.

JP 11-169592 describes an encoder scale for use in an image recording means, comprising a carriage. The carriage and the encoder scale are formed from different materials, having a relatively small difference in thermal expansion coefficient. This reduces the difference in hit position of the ink drops discharged, but does not eliminate this difference.

US 5,182,867 describes a position measuring apparatus, wherein a probing unit is connected to an object and the probing unit probes the graduation of a measuring scale which is arranged upon a support member. The support member is fastened to a second object. The support member and the second object have different thermal expansion coefficients. The support member is rigidly connected with an auxiliary support member. The thermal expansion coefficients of the support member and that of the auxiliary support member differ from one another. The cross-sections of the support member and the auxiliary support member are chosen so that the resulting thermal expansion coefficient of the structural combination of the support member and the auxiliary support member is substantially equal to the thermal expansion coefficient of the second object. However, this comprises a rather complex structure.

US 4,034,460 describes a method of forming an optical grating for an positioning apparatus, wherein positioning is accomplished by an optical grating having slits spaced at intervals corresponding to the spacings between stations to which the apparatus is to be positioned. According to the subject-matter described, a frame or plate of the same material as that of the cooperating apparatus, or at least having the same thermal expansion coefficient, is prepared having an elongated opening therein. A thin grating sheet of nickel or similar material having regularly spaced slits formed therein is laid over the frame and the sheet is integrally united to the frame along narrow parallel zones extending adjacent the side edges of the opening. As a consequence, the apparatus and the optical grating have the same thermal expansion coefficient, which reduces the errors in positioning. However, this comprises a rather complex structure.

The accuracy of position detection achieved with the encoding system is subject to errors which may result among others from thermal expansion of the codestrip. In the known system, such errors are compensated by providing two sensors that are mounted on the carriage with a well defined spacing in the main scanning direction. On the basis of the known distance between the two sensors, the position signals provided by the encoding system can be calibrated electronically. It is prerequisite however, that the distance between the two sensors is known exactly and is, itself, not subject to any substantial thermal expansion effects.

In case of an ink jet colour printer, the printhead on the carriage comprises a plurality of parallel rows of nozzles, e.g. one for each of the four basic colours cyan, magenta, yellow and black. These rows are spaced apart in the main scanning direction, and the offset between the rows has to be compensated by appropriately controlling the firing timings of the nozzles on the basis of the position information provided by the encoding system. Composite colours are printed by combining dots of ink in the various basic colours. Then, the hue of a printed pixel, e.g. a green pixel obtained by combining dots in cyan and yellow, will depend on the amount of overlap between the dots in the basic colours. In order to obtain a high quality printed image, it is therefore important that the dots printed with different nozzle rows can be registered with high accuracy. However, thermal expansion or shrinkage of the carriage may lead to changes in the offsets between the different rows of nozzles, and this limits the registration accuracy.

Since the hue of a colour pixel depends not only on the amount of overlap between the dots but also on the sequence in which the dots are printed, it has been proposed to use a printhead in which two nozzle rows are provided for each colour and the rows dedicated to the various colours are arranged mirror-symmetrically, so that the sequence in which the colour dots are printed may be same in the forward stroke and the return stroke of the carriage. Then, however, the length of the carriage in main scanning direction must be increased further, and the printer will be even more sensitive to thermal expansion of the carriage.

The problem caused by thermal expansion or shrinkage of the carriage is not only encountered in ink jet printers but, more generally, in any kind of printer in which printing elements are spaced apart in the main scanning direction and it is nevertheless necessary to register the sub-images printed with the different printing elements. A similar problem occurs in plotters, for example when a line that has been drawn with a first pen shall be continued smoothly with the use of another pen. In a scanner, the active elements may be optical sensors that are sensitive to different wavelengths of light. Here, in order to correctly determine the colour of a scanned pixel, it is also important that the offset between the two sensors is compensated correctly by controlling the sample timings.

In order to obviate the problem caused by thermal expansion of the carriage it is of course possible to use a carriage made of a material that has a thermal expansion coefficient close to zero. This, however, leads to increased costs for the carriage.

Another approach is to provide a sensor for detecting the temperature of the carriage and to compensate the effect of thermal expansion electronically. However, this also adds to the complexity and costs of the hardware and requires additional capacity for electronic data processing.

It is an object of the invention to provide a simple and inexpensive linear position encoding system which is tolerant to thermal expansion or shrinkage of the carriage and does not require a measurement of the temperature of the carriage.

According to the invention, this object is achieved by a system according to the preamble of claim 1, in which the codestrip has the same thermal expansion coefficient as the carriage.

Since the codestrip is arranged in close proximity to the carriage and, hence, is subject to the same environmental temperature as the carriage, the effect of thermal expansion or shrinkage of the carriage is automatically canceled by a corresponding thermal expansion or shrinkage of the codestrip. Thus, once the timing control for the active elements has been so adjusted that the offsets between the different active elements are compensated, this compensation will be maintained regardless of any temperature changes.

It is accordingly a remarkable advantage of the invention that an inexpensive material with a non-zero thermal expansion coefficient can be used not only for the carriage but also for the codestrip. Of course, the codestrip must be mounted in such a manner that it is free to expand and shrink under temperature changes. This, however, is required for a high quality codestrip, anyway, in order to prevent the codestrip from bulging or being distorted in case of differential thermal expansion of the codestrip and the machine frame. Mounting structures allowing such a free thermal expansion or contraction of the codestrip are well known in the art. For example, the codestrip may be fixed at one end and slideably supported at the other end, or it may be fixed in the center and slidably supported at both ends.

Preferred embodiments of the invention are indicated in the dependent claims.

Since the codestrip should provide a high spatial resolution and, accordingly, must have a pattern of very fine position marks arranged with a very small pitch, the substrate on or in which the position marks are formed has to fulfil specific requirements in order for the sensor to produce a well-defined detection signal. In a preferred embodiment, the position marks are formed in a resinous substrate such as polyester that is fixedly attached (e.g. by gluing or coating) to a carrier strip whose rigidity and tensile strength is significantly larger than that of the substrate. Then, the thermal expansion coefficient will be determined alone by the material of the carrier strip and will practically not be influenced by the material of the substrate. For example, the carriage and the carrier strip may be made of the same metal material, e.g. stainless steel or aluminum, and the substrate for the position marks may be formed by a polyester film on the carrier strip. In order to provide a transmission type codestrip, the part of the polyester film carrying the position marks may project beyond the edge of the carrier strip.

A preferred embodiment of the invention will now be described in conjunction with the drawings, in which:
- Fig. 1: is a schematic perspective view of an ink jet printhead carriage traveling along a platen of a printer, and a position encoding system according to the invention;
- Fig. 2: is a front view of the printhead;
- Fig. 3: is a diagram illustrating the effect of thermal shrinkage of the carriage;
- Fig. 4: is a diagram similar to figure 3 illustrating a register error between dots printed with different nozzles of the printhead; and
- Fig. 5: is a diagram illustrating how the registration error is compensated in accordance with the invention.

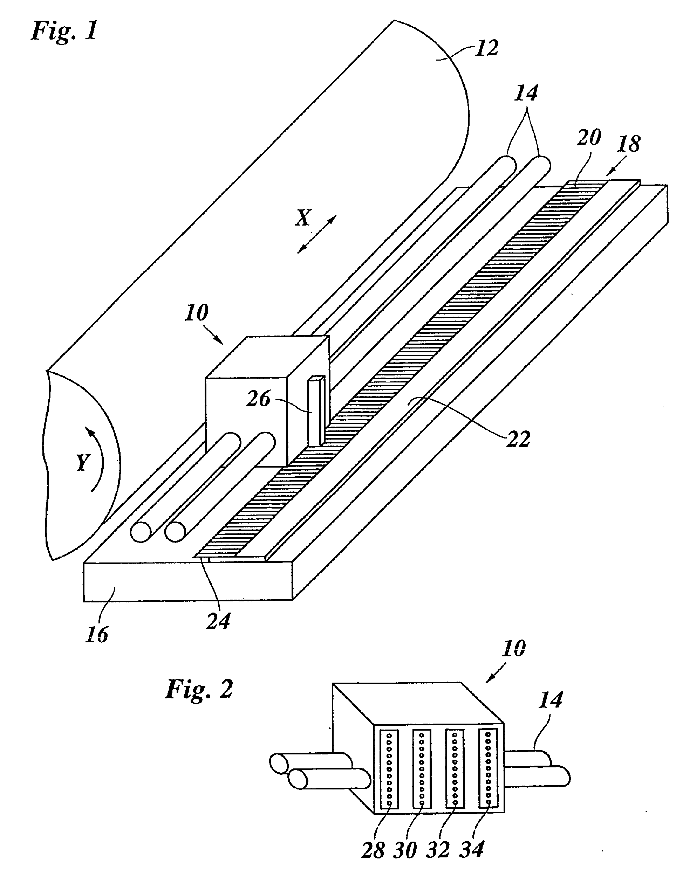

In Figure 1, a carriage 10 carrying an ink jet printhead is moved back and forth in a main scanning direction X along a platen 12 on which a printing medium is transported in a subscanning direction Y normal to the main scanning direction. The carriage 10 is guided on guide rails 14 which are mounted in a fixed position in relation to the platen 12 and a frame body 16. A codestrip 18 having a plurality of position marks or slits 20 is fixed to the frame body 16 and extends along the guide rails 14. The codestrip 18 comprises a carrier strip 22 made of the same material as the carriage 10, e.g. stainless steel, and a substrate of polyester film 24 in which the slits 20 are formed and which is firmly attached to one surface of the carrier strip 22 so as to project beyond one edge of the carrier strip.

An optical sensor 26 is fixedly mounted on the carriage 10 with its sensitive portion facing the projecting part of the polyester film 24. Thus, when the carriage 10 moves in the main scanning direction X, the slits 20 can be detected with the sensor 26, and the sensor delivers a pulse train corresponding to the sequence of slits. By counting these pulses, an electronic control circuit (not shown) of the printer can determine the position of the carriage 10 in X-direction with high accuracy. The positional accuracy depends on the pitch with which the slits 20 are arranged on the codestrip 18, but may be improved by interpolation techniques on the basis of the known velocity of the carriage 10.

As is shown in figure 2, the printhead carriage 10 comprises four rows of ink jet nozzles 28, 30, 32 and 34 for the four basic colours cyan, magenta, yellow and black. The rows extend in subscanning direction and are spaced apart from each other in main scanning direction.

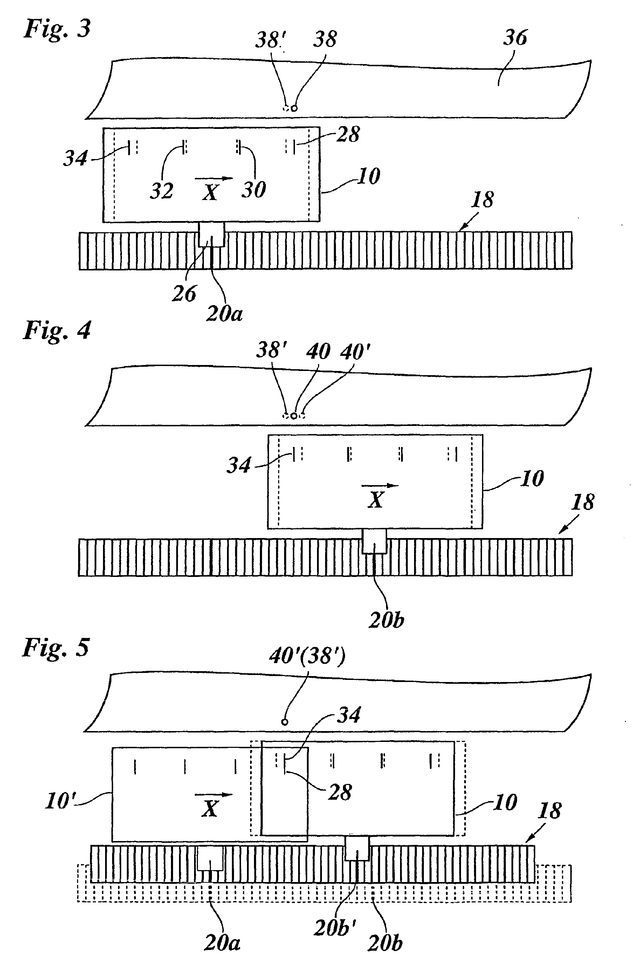

Figure 3 diagrammatically shows a portion of a recording sheet 36 placed on the platen 12, and a plan view of the carriage 10 and the encoding system formed by the sensor 26 and the codestrip 18. The positions of the nozzles 28-34 and the position of the sensitive part of the sensor 26 are indicated by short vertical lines.

When, in figure 3, the carriage 10 or, more exactly, the sensitive part of the sensor 26 has reached the slit 20a, the nozzle 28 is energized to print an ink dot 38 on the recording sheet 36.

When the carriage 10 undergoes thermal contraction, the positions of the nozzles 28-34 slightly shift, as has been shown exaggeratedly in dotted lines in figure 3. Then, the ink dot 38 would be printed in the position 38' which is slightly shifted relative to the intended position. However, since all dots printed with the same nozzle 28 will be shifted in the same way, this does not lead to a distortion of the printed image but only to a minor shift of the image as a whole, which is not perceptible to the human eye.

Thermal expansion or shrinkage of (only) the carriage 10 does however cause a problem when a predetermined positional relationship (register) is to be maintained between ink dots printed with the different nozzles 28, 30, 32 and 34. For simplifying the discussion, it shall now be assumed that the nozzle 34 shall be energized at an appropriate timing so as to print an ink dot right on top of the already printed dot 38. The carriage moves in the direction X to the right in figures 3 and 4. As is shown in figure 4, when the carriage 10 is not subject to thermal shrinkage, the nozzle 34 must be energized when the carriage has reached the slit 20b which, in this example, is twenty slits away from the slit 20a. Now, thermal shrinkage has the effect that the nozzle 34 prints the dot actually in the position 40' which is considerably offset from the position of the dot 38'.

In the discussion of figures 3 and 4 is has been assumed that thermal changes affect only the carriage 10 but not the codestrip 18.

In figure 5, the carriage in the condition with thermal shrinkage has been shown in continuous bold lines, whereas the original contour of the carriage has been indicated in dotted lines. Since, according to the invention, the carrier strip 22 which determines the thermal expansion behavior of the codestrip 18 is made of the same material as the carriage 10 and hence has the same thermal expansion coefficient, the codestrip 18 undergoes the same percentage of thermal shrinkage as the carriage 10. Figure 5 shows the condition of the codestrip 18 with thermal shrinkage in continuous lines. For comparison, the original state of the codestrip has been shown in dotted lines (with a slight vertical offset). Faint continuous lines indicate the position 10' of the carriage (with thermal shrinkage) at the time when the nozzle 28 prints the dot 38' (the position 10' has also been shown with a slight vertical offset for reasons of clarity).

As shown in figure 5, the nozzle 34 prints the dot 40' when the carriage 10 has traveled twenty slits further to the position 20b' which is shifted from the original position 20b due to the thermal shrinkage of the codestrip 18. Thus, when the sensor detects the position 20b', the nozzle 34 coincides with the position of the dot 38', and the new dot 40' is again printed right on top of the previous dot. This means that the effect of thermal shrinkage of the printhead 10 is completely compensated by the thermal shrinkage of the codestrip 18.

Thermal shrinkage or expansion of the codestrip 18 and the carriage 10 will only have the effect that the printed image, as a whole, undergoes a corresponding shrinkage or expansion in width direction, but this minor distortion is not perceptible to the human eye.

In figure 5, it has been assumed for simplicity that the codestrip 18 is fixed relative to the frame body in the position of the slit 20a, so that the slit 20a does not move due to thermal expansion or shrinkage. However, any change in the position of the slit 20a would have affected the positions of both dots 38' and 40' exactly in the same way, so that the effect of thermal expansion is eliminated regardless of where the codestrip is fixed to the frame body. The reason is that, thanks to the identical thermal expansion coefficient of the carriage 10 and the codestrip 18, the distance between the nozzles 28 and 34 on the carriage is always, for any temperature, identical with the distance between the corresponding slits 20a and 20b on the codestrip.

## Claims

1. Linear position encoding system for a moving carriage 10 carrying at least two active elements (28, 30, 32, 34) that are spaced apart in the direction (X) of movement of the carriage, the linear position encoding system comprising a codestrip (18) and a sensor means (26), the codestrip extending along the path of movement of the carriage and having a plurality of position marks (20) detectable by the sensor means (26), the sensor means mounted on the carriage, said codestrip (18) having the same thermal expansion coefficient as the carriage (10), **characterized in that** the sensor means comprise only a single sensor (26) for controlling the timings at which said at least two active elements (28, 30, 32, 34) are activated, wherein a time difference between the activation timings of two active elements corresponds to a fixed number of position marks (20) to be detected by said sensor (26), and **in that** the codestrip (18) comprises a substrate (24) on or in which the position marks (20) are formed and which is fixed to the carrier strip (22) which has a higher rigidity than the substrate (24), so that the thermal expansion behavior of the codestrip is determined by the carrier strip (22).

2. System according to claim 1, wherein the carrier strip (22) is made of the same material as the carriage (10).

3. System according to claim 1 or 2, wherein the substrate (24) is made of a synthetic resin.

4. System according to any of the claims 1 to 3, wherein the substrate (24) is a film which projects beyond one edge of the carrier strip (22).

5. Printer comprising a printhead carriage (10) with a plurality of printing elements (28, 30, 32,34) as active elements, **characterized by** a linear position encoding system (18, 26) according to any of the claims 1 to 4.

6. Printer according to claim 5, wherein said printing elements are ink jet nozzles (28, 30, 32, 34).

## Patentansprüche

1. Linearpositionscodiersystem für einen sich bewegenden Wagen (10), der wenigstens zwei aktive Elemente (28, 30, 32, 34) trägt, die in der Richtung (X) der Bewegung des Wagens in Abstand zueinander angeordnet sind, welches Linearpositionscodiersystem einen Codestreifen (18) und eine Sensoreinrichtung (26) aufweist, wobei sich der Codestreifen entlang der Bewegungsbahn des Wagens erstreckt und eine Vielzahl von Positionsmarken (20) hat, die durch die Sensoreinrichtung (26) detektierbar sind, wobei die Sensoreinrichtung auf dem Wagen montiert ist und der Codestreifen (18) den gleichen thermischen Ausdehnungskoeffizienten hat wie der Wagen (10), **dadurch gekennzeichnet, dass** die Sensoreinrichtung nur einen einzigen Sensor (26) zur Steuerung der Zeiten aufweist, zu denen die wenigstens zwei aktiven Elemente (28, 30, 32, 34) aktiviert werden, wobei ein Zeitunterschied zwischen den Aktivierungszeiten zweier aktiver Elemente einer festen Anzahl von Positionsmarken (20) entspricht, die von dem Sensor (26) zu detektieren sind, und dass der Codestreifen (18) ein Substrat (24) aufweist, an oder in dem die Positionsmarken (20) gebildet sind und das an dem Trägerstreifen (22) befestigt ist, der eine höhere Steifigkeit hat als das Substrat (24), so dass das thermische Ausdehnungsverhalten des Codestreifens durch den Trägerstreifen (22) bestimmt wird.

2. System nach Anspruch 1, bei dem der Trägerstreifen (22) aus dem gleichen Material hergestellt ist wie der Wagen (10).

3. System nach Anspruch 1 oder 2, bei dem das Substrat (24) aus einem synthetischen Kunststoff hergestellt ist.

4. System nach einem der Ansprüche 1 bis 3, bei dem das Substrat (24) ein Film ist, der über eine Kante des Trägerstreifens (22) übersteht.

5. Drucker mit einem Druckkopfwagen (10) mit einer Vielzahl von druckenden Elementen (28, 30, 32, 34) als aktiven Elementen, **gekennzeichnet durch** ein Linearpositionscodiersystem (18, 26) nach einem der Ansprüche 1 bis 4.

6. Drucker nach Anspruch 5, bei dem die druckenden Elemente Tintenstrahldüsen (28, 30, 32, 34) sind.

## Revendications

1. Système de codage de position linéaire pour un chariot mobile 10 portant au moins deux éléments actifs (28, 30, 32, 34) qui sont espacés dans la direction (X) de déplacement du chariot, le système de codage de position linéaire comprenant une bande de codage (18) et un moyen formant capteur (26), la bande de codage s'étendant le long du chemin de déplacement du chariot et ayant une pluralité de marques de position (20) pouvant être détectées par le moyen formant capteur (26), le moyen formant capteur étant monté sur le chariot, ladite bande de codage (18) ayant le même coefficient de dilatation thermique que le chariot (10), **caractérisé en ce que** le moyen formant capteur comprend seulement un capteur unique (26) pour commander les minutages auxquels lesdits au moins deux éléments actifs (28, 30, 32, 34) sont activés, dans lesquels une différence de temps entre les minutages d'activation de deux éléments actifs correspond à un nombre fixé de marques de position (20) à détecter par ledit capteur (26), et **en ce que** la bande de codage (18) comprend un substrat (24) sur ou dans lequel les marques de position (20) sont formées et qui est fixé à la bande de support (22) qui a une rigidité supérieure au substrat (24), de sorte que le comportement de dilatation thermique de la bande de codage est déterminé par la bande de support (22).

2. Système selon la revendication 1, dans lequel la bande de support (22) est faite de la même matière que le chariot (10).

3. Système selon la revendication 1 ou 2, dans lequel le substrat (24) est fait d'une résine synthétique.

4. Système selon l'une quelconque des revendications 1 à 3, dans lequel le substrat (24) est un film qui dépasse au-delà d'un bord de la bande de support (22).

5. Imprimante comprenant un chariot de tête d'impression (10) avec une pluralité d'éléments d'impression (28, 30, 32, 34) en tant qu'éléments actifs, **caractérisée par** un système de codage de position linéaire (18, 26) selon l'une quelconque des revendications 1 à 4.

6. Imprimante selon la revendication 5, dans laquelle lesdits éléments d'impression sont des buses de jet d'encre (28, 30, 32, 34).
